# EUROPEAN PATENT APPLICATION

(11) **EP 4 831 093 A1**
(43) Date of publication of application: **28.10.2026**
(21) Application number: 24907991.4
(22) Date of filing: 16.12.2024
(51) Int. Cl.: B65G 33/14, B65G 33/24, B02C 18/22, H01M 10/54

(54) **SCREW FEEDER FOR TRANSFERRING BATTERY SHREDS**

(30) Priority: 18.12.2023 KR 20230184845
(71) Applicant: POSCO Holdings Inc., Pohang-si, Gyeongsangbuk-do 37859 (KR)
(72) Inventor: HAN, Sangwoo, Pohang-si, Gyeongsangbuk-do 37859 (KR); PARK, Joongkil, Pohang-si, Gyeongsangbuk-do 37859 (KR); PARK, Chonglyuck, Pohang-si, Gyeongsangbuk-do 37859 (KR); KIM, Wan-Yi, Pohang-si, Gyeongsangbuk-do 37859 (KR); LEE, Juseung, Pohang-si, Gyeongsangbuk-do 37859 (KR); PARK, Junyong, Pohang-si, Gyeongsangbuk-do 37859 (KR)
(74) Representative: Pfenning, Meinig & Partner mbB
(86) International application number: PCT/KR2024/020443
(87) International publication number: WO 2025/135708

(57) **Abstract**

The present invention relates to a screw feeder, particularly to a screw feeder for transferring battery shreds, comprising a housing surrounding a screw disposed parallel to a transport direction of the battery shreds, an inlet into which the battery shreds are input, a transport section for transferring the battery shreds input to the inlet, and an outlet for discharging the battery shreds, and satisfies Equation 1 in the present specification.

## Description

### [Technical Field]

The present disclosure relates to a battery processing device, and more particularly, to a screw feeder for transferring battery shreds.

### [Background Art]

As demand for electric vehicles increases globally, the problem of processing waste batteries generated from the electric vehicles is emerging as a social issue. In the case of lithium secondary batteries, which constitute the main component of the waste batteries, they contain organic solvents, explosive substances, and heavy metal substances such as Ni, Co, Mn, and Fe, but Ni, Co, Mn, and Li have great scarcity value as valuable metals, and recovery and recycling processes after the lithium secondary batteries are discarded are emerging as important research fields.

Specifically, a lithium secondary battery comprises, as main components, copper and aluminum used as current collectors; oxides containing Li, Ni, Co, and Mn constituting a cathode material; and graphite used as an anode material. The battery further comprises a separator separating the cathode material and the anode material, and an electrolyte injected into the separator. The electrolyte comprises solvents and salts, where the solvents are mainly a mixture of carbonate organic materials such as ethylene carbonate and propylene carbonate, and LiPF6 is used as a representative salt.

In order to utilize the waste batteries, developments are actively underway for a waste battery recycling process that recovers valuable metals through a post-process after performing a pre-process of crushing the waste batteries to produce intermediate materials such as waste battery shreds or black powder.

The waste battery comprises a cathode material made of a thin aluminum metal, an anode material made of a thin copper metal, and a separator, located therebetween, made of a vinyl material such as polyethylene. This structure is in a stacked configuration. This stacked configuration, being analogous to a book, allows it to be easily displaced when pushed in a lateral direction; however, when a certain load is applied in a thickness direction, it becomes compressed and subsequently completely immobile, causing the feeder to stop.

Due to the problem, transport methods utilizing a conveyor belt are predominantly employed instead of transport utilizing a screw, but such conveyor belt transport methods may cause odor and health problems as electrolyte gas escapes to the outside.

Therefore, in a screw feeder, there is a need for research on a screw feeder that may increase the efficiency of equipment, may facilitate the development of a process that allows long-term use of facilities when transferring shreds, and may increase operation efficiency by causing fewer facility failures.

### [Summary of Invention]

### [Technical Problem]

A technical problem to be solved by the present disclosure is to increase the efficiency of equipment, to develop a process that allows long-term use of facilities when transferring shreds, and to provide a screw feeder capable of increasing operation efficiency by causing fewer facility failures.

### [Technical Solution]

According to an embodiment, a screw feeder relates to a screw feeder for transferring battery shreds, and comprises a housing surrounding a screw disposed parallel to a transport direction of battery shreds, an inlet into which the battery shreds are input, a transport section for transferring the battery shreds input to the inlet, and an outlet for discharging the battery shreds, and may satisfy the following Equation 1. <Equation 1> $0.01 \leq A / B < 0.25$

(In Equation 1, A means a clearance between the top end of the screw and the inner wall of the housing, and B means the height of the inner wall of the housing)

In one embodiment, there may be included a pressure relief section disposed at a front end of the outlet and configured to release pressure of the transferred battery shreds. In one embodiment, the pressure relief section may include a cutting member for cutting the battery shreds into a predetermined size.

In one embodiment, the screw may be disposed to extend from the inlet toward the transport direction of battery shreds. In one embodiment, the screw may not be disposed beyond the end of the transport section.

In one embodiment, the screw may be disposed to extend from the inlet toward the upper direction of the outlet and may be disposed to be in contact with the sidewall of the housing. In one embodiment, the diameter of the screw may decrease from the inlet toward the outlet.

In one embodiment, the diameter of the screw disposed above the outlet may be smaller than the diameters of the screw disposed in the inlet and the transport section. In one embodiment, the screw comprises an edge member disposed in a helical shape on a surface of the screw, and the edge member may be disposed to be inclined at a predetermined angle relative to the direction parallel to the screw toward the direction perpendicular to the input direction of the battery shreds.

In one embodiment, a dummy edge member ED' extending from the edge member ED and disposed in the pressure relief section may be included. In one embodiment, a reverse transport section disposed between the transport section and the side portion of the housing may be included.

In one embodiment, the reverse transport section may comprise an edge member disposed to be inclined at a predetermined angle in a direction opposite to the input direction of the battery shreds based on a direction parallel to the screw. In one embodiment, the cross-sectional shape of the cutting member may include at least one branch portion disposed in at least some area of the main blade portion.

In one embodiment, an angle between a direction in which the battery shreds move through the transport section and a direction in which the battery shreds are discharged through the outlet may be 10° or more. In one embodiment, the clearance between the top end of the screw and the inner wall of the housing may be 5 mm or more.

### [Advantageous Effects]

A screw feeder according to an embodiment provides a screw feeder that comprises a pressure relief section and is capable of increasing the efficiency of equipment, developing a process that allows long-term use of facilities when transferring shreds, and increasing operation efficiency by causing fewer facility failures.

### [Brief Description of Drawings]

FIG. 1 is a cross-sectional view of a screw feeder according to an embodiment of the present invention.
FIG. 2 is a cross-sectional view of a screw feeder according to another embodiment of the present invention.
FIG. 3 is a cross-sectional view of a screw feeder according to another embodiment of the present invention.
FIG. 4 is a cross-sectional view of a screw feeder according to another embodiment of the present invention.
FIG. 5 is a cross-sectional view of a screw feeder according to another embodiment of the present invention.
FIGS. 6a to 6q illustrate various shapes of the cutting member of the present invention.

### [Detailed Description]

Terms such as first, second, and third are used to describe various parts, components, regions, layers and/or sections, but are not limited thereto. These terms are used only to distinguish one part, component, region, layer or section from another part, component, region, layer or section. Accordingly, a first part, component, region, layer or section described below may be referred to as a second part, component, region, layer or section without departing from the scope of the present invention.

Technical terms used herein are only for referring to specific embodiments and are not intended to limit the present invention. Singular forms used herein also include plural forms unless the phrases clearly indicate the opposite meaning. The meaning of "comprising" used in the specification delineates specific features, regions, integers, steps, operations, elements, and/or components, and does not exclude the presence or addition of other features, regions, integers, steps, operations, elements, and/or components.

When a part is referred to as being "on" another part, it may be directly on the other part or other parts may be interposed therebetween. In contrast, when a part is referred to as being "directly on" another part, no other part is interposed therebetween.

Although not defined otherwise, all terms including technical and scientific terms used herein have the same meaning as commonly understood by a person skilled in the art to which the present invention belongs. Terms defined in a commonly used dictionary are further interpreted as having a meaning consistent with the related technical literature and the currently disclosed content, and are not interpreted in an ideal or very formal sense unless defined.

Hereinafter, embodiments of the present invention will be described in detail. However, these are presented by way of example only, and the present invention is not limited thereby, but is defined solely by the scope of the claims to be described hereinafter.

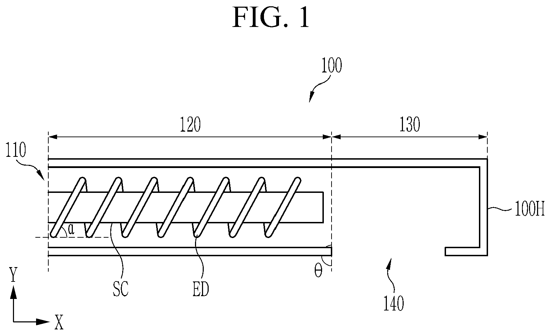

FIG. 1 is a view of a screw feeder 100 according to an embodiment of the present invention.

A screw feeder 100 according to an embodiment comprises a housing 100H, an inlet 110, a transport section 120, a pressure relief section 130, and an outlet 140, and may be a feeder for transferring battery shreds. Specifically, the screw feeder 100 may be a device for delivering battery shreds crushed through a pre-treatment process from end-of-life batteries such as waste batteries to a subsequent process. The battery may be, for example, a lithium secondary battery separated from a vehicle, a secondary battery separated from an electronic device such as a mobile phone, a camera, and a laptop, specifically, may be a lithium secondary battery.

The battery shreds are for recovering valuable metals from waste batteries, and have a layered structure including a separator in which a cathode and an anode are laminated on at least one surface. Specifically, the layered structure may include a configuration in which a cathode and an anode are included on one surface of the separator, relative to the separator. More specifically, the number of layers of the layered structure may correspond to the number of separators.

The layered structure includes, for example, any one of cathode-separator-anode, separator-anode, and anode-separator, and for example, cathode-separator-anode-separator-cathode-separator-anode may have a three-layer layered structure. Specifically, the unit battery shreds may have a predetermined thickness in a thickness direction as one or more layers are laminated.

The housing 100H may be a member for minimizing the influence from the external environment of the screw feeder 100. Specifically, the housing 100H may be a member that protects battery shreds from being affected by the external environment when they are input and discharged through the screw feeder 100. More specifically, the housing 100H may be a member disposed to surround a screw SC that assists movement of battery shreds inside the screw feeder 100.

In one embodiment, the housing 100H may have a shape such as a circle or a square in cross section. This is a non-limiting example, and may have a shape that does not interfere with rotation of the screw SC and may easily move battery shreds from the inlet 110 to the outlet 140.

The screw SC is disposed inside the housing 100H and may be a member for moving battery shreds within the screw feeder 100. Specifically, the screw SC may be disposed to extend from the inlet 110 toward the transport direction of the battery shreds. Specifically, the screw SC may be disposed to extend in an X-axis direction, which is a direction in which the battery shreds move.

In one embodiment, the screw SC may be a rotatable member. For example, the screw SC may comprise a driving unit (not shown) that receives power from the outside. The screw SC may rotate and move battery shreds by being rotated by the driving unit.

In one embodiment, the screw SC may comprise an edge member ED disposed in a helical shape on a surface of the screw SC. Specifically, the edge member ED may be in a protruding shape disposed to surround the surface of the screw SC. For example, the cross-sectional shape of the edge member ED may have a linear shape or a curved shape.

In one embodiment, the screw SC may not be disposed beyond an end of the transport section 120. Specifically, the screw SC may be disposed within the transport section 120 and may be not disposed above the outlet 140, so that battery shreds rotated and moved within the transport section 120 may be discharged in a discharge direction through the outlet 140 after undergoing a pressure relief process in a pressure relief section 130 disposed above the outlet.

The edge member ED may be disposed to surround at least some area of the screw SC in a helical shape, so that as the screw SC rotates, battery shreds may be easily moved in a direction in which the outlet 140 is disposed.

In one embodiment, the edge member ED may be disposed to be inclined at a predetermined angle with respect to a direction parallel to the screw SC, toward a direction perpendicular to an input direction of the battery shreds. Specifically, the edge member ED may be disposed in a helical shape with an angle α, which is a predetermined angle, with respect to a direction parallel to the screw SC, toward a Y-axis direction, which is a direction perpendicular to the input direction of the battery shreds.

In one embodiment, the angle α may be an angle of more than 0° and less than 90°. As the angle α satisfies the above-mentioned range, it may be disposed in a diagonal shape in cross section, so that movement of battery shreds may be more easily controlled.

Battery shreds may be input into the screw feeder 100 through the inlet 110. Specifically, the inlet 110 may be disposed to be opened and may assist in easily inputting battery shreds into the screw feeder 100.

In another embodiment, the inlet 110 may comprise a cover unit (not shown) that enables opening and closing of the inlet 110. Since the inlet 110 includes the cover unit, impurities may be prevented from being input into the screw feeder 100 when the screw feeder is not operating.

The transport section 120 refers to a space portion through which battery shreds move. Specifically, the transport section 120 may refer to a passage for transporting battery shreds input from the inlet 110 to the outlet 140. More specifically, the screw SC is disposed in the transport section 120, and as the screw SC rotates, battery shreds may move through the transport section 120. A detailed description of the screw SC is the same as described above to the extent that it is not inconsistent therewith.

The outlet 140 may be a member for discharging battery shreds moved through the transport section 120. Specifically, the outlet 140 may be configured such that at least a portion of the bottom surface of the housing 100H is opened and arranged within a predetermined range. Since the outlet 140 is configured such that at least a portion of the bottom surface of the housing 100H is opened and arranged, the battery shreds may fall and be discharged by gravity in a direction opposite to the Y-axis.

In one embodiment, the outlet 140 may include an openable cover unit. Since the outlet 140 includes the cover unit, thereby enabling it to be opened and closed as necessary, it may prevent foreign matter such as impurities from being introduced into the screw feeder.

In one embodiment, the screw feeder 100 may include a pressure relief section 130. Specifically, the pressure relief section 130 is disposed at the front end of the outlet 140 and may refer to an area that releases pressure from battery shreds delivered through the transport section 120. Specifically, releasing the pressure of the battery shreds refers to a process in which the compressive force on the shredded material, which has been compressed during a transport process, is released. By including the pressure relief section 130, the screw feeder 100 thereby may assist in lowering the pressure in the battery shreds and discharging battery shreds with reduced fire risk through the outlet 140.

In one embodiment, an angle θ between a direction in which battery shreds move through the transport section 120 and a direction in which battery shreds are discharged through the outlet 140 may be 10° or more. Specifically, the angle θ may be 45° or more, and more specifically, 75° or more and 170° or less. When the direction in which battery shreds move through the transport section 120 and the direction in which battery shreds are discharged through the outlet 140 satisfy the above-mentioned angle range, there is an advantage that battery shreds may be easily discharged to the outlet 140.

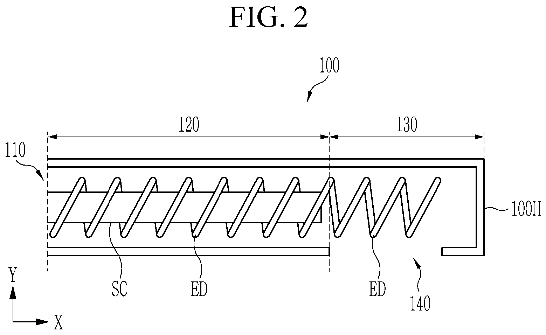

FIG. 2 is a cross-sectional view of a screw feeder 100 according to another embodiment of the present invention.

Referring to FIG. 2, in one embodiment, the screw feeder 100 may further comprise a dummy edge member ED'. Specifically, the dummy edge member ED' may be a member in which an edge member ED is disposed to extend along an X-axis direction, which is a transport direction of battery shreds. Specifically, the dummy edge member ED' may extend from the edge member ED and be disposed in the pressure relief section 130. As the screw SC rotates, the edge member ED disposed on the surface of the screw SC and the dummy edge member ED' connected to and in contact with the edge member ED may rotate together. Accordingly, battery shreds moved through the transport section 120 are maintained for a predetermined time by the dummy edge member ED' and then discharged to the outlet 140 according to rotation, so that the pressure of battery shreds within the pressure relief section 130 may be more easily reduced, and at the same time, their discharge to the outlet 140 may be more easily facilitated.

In one embodiment, the dummy edge member ED' may be formed integrally with the edge member ED. Specifically, the dummy edge member ED' may be formed integrally with the edge member ED and may be designed such that the screw SC is not disposed within the dummy edge member ED'.

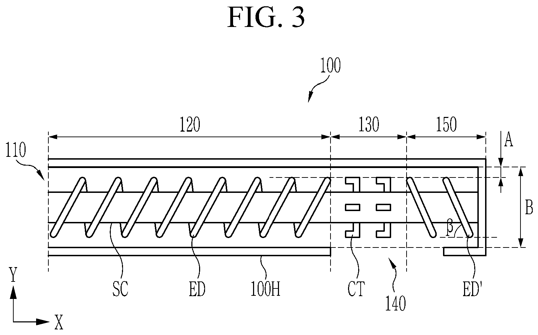

FIG. 3 is a cross-sectional view of a screw feeder 100 according to another embodiment of the present invention.

Referring to FIG. 3, in one embodiment, the pressure relief section may comprise a cutting member CT. Specifically, the pressure relief section 130 may include a cutting member CT for crushing battery shreds. Specifically, the cutting member CT may be a member for cutting battery shreds transported through the transport section. Specifically, battery shreds of various shapes transported through the transport section may be crushed into battery shreds having similar sizes by having pressure released in the pressure relief section 130 and simultaneously being cut in the cutting member CT. Accordingly, the size of the battery shreds discharged through the outlet 140 may be controlled to be uniform.

In one embodiment, the screw feeder 100 may include a reverse transport section 150. The reverse transport section 150 may be a member that assists in easily discharging battery shreds to the outlet 140 when some of the battery shreds moved through the transport section 120 cannot be discharged to the outlet 140 and remain in the housing 100H. Specifically, the reverse transport section 150 may be disposed between the transport section 120 and a side portion of the housing 100H. More specifically, the reverse transport section 150 may be an area disposed between the pressure relief section 130 and the side portion of the housing 100H.

In one embodiment, the screw SC may be disposed to extend from the inlet 110 toward an upper direction of the outlet 140 and be disposed to be in contact with the sidewall of the housing 100H. In one embodiment, the screw SC may be integral, disposed inside the housing 100H, and disposed to extend to the transport section 120, the pressure relief section 130, and the reverse transport section 150.

In one embodiment, the reverse transport section 150 may include an edge member ED' disposed to be inclined at a predetermined angle in a direction opposite to an input direction of the battery shreds based on a direction parallel to the screw SC. Specifically, the reverse transport section 150 may be disposed to be inclined at an angle β in a direction opposite to a direction in which shredded material is input. In one embodiment, the angle β may be an angle of more than 0° and less than 90°.

As the angle β satisfies the above-mentioned range, an edge member ED' disposed on a surface of the screw SC in the reverse transport section 150 may move battery shreds in a direction opposite to an edge member ED disposed on a surface of the screw SC in the transport section 120. Accordingly, the battery shreds may be prevented from remaining in the screw feeder 100 for a long time, thereby preventing the device from stopping.

In one embodiment, the screw feeder 100 may satisfy the following Equation 1. <Equation 1> $0.01 \leq A / B < 0.25$

(In Equation 1, A means a clearance between the top end of the screw and the inner wall of the housing, and B means the height of the inner wall of the housing)

Equation 1 means the clearance between the top end of the screw SC and the inner wall of the housing 100H, with respect to the height of the inner wall of the housing 100H, and may be an index for movement of battery shreds within the screw feeder 100. Equation 1 may be 0.01 or more to less than 0.25, specifically 0.01 to 0.125, and more specifically 0.0125 to 0.100.

Specifically, A means a clearance between the top end of the screw, for example, the top end of the edge member ED, and the housing 100H. B refers to a vertical height between the inner walls of the housing 100H, for example, a gap in the Y-axis direction. Since Equation 1 satisfies the above-mentioned range, battery shreds may smoothly move from the inlet 110 to the outlet 140 in the screw feeder without stopping.

When Equation 1 deviates from the upper limit of the above-mentioned range, there is a problem that transport efficiency decreases because a gap inside a feeder is too large and a large stagnant zone is generated. When Equation 1 deviates from the lower limit of the above-mentioned range, there is a problem that operation becomes impossible as shredded material gets caught between a wall and a screw because it becomes similar to a minimum thickness of the shredded material.

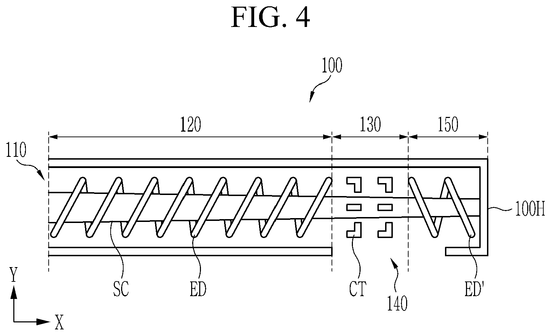

FIG. 4 is a cross-sectional view of a screw feeder according to another embodiment of the present invention.

Referring to FIG. 4, in one embodiment, a diameter of the screw SC may decrease from the inlet 110 toward the outlet 140. Specifically, the diameter of the screw SC may decrease as it extends in a horizontal direction, for example, in an X-axis direction.

As the diameter of the screw SC decreases toward the X-axis direction, an area where battery shreds are disposed around the inlet 110 is small, so that a pressure of the battery shreds may be in a high state. Thereafter, as it moves toward the transport section 120 and the pressure relief section 130, the area where battery shreds are disposed widens, and the pressure of the battery shreds may be lowered. Accordingly, while the battery shreds move by the screw SC, the pressure of the battery shreds is lowered, and agglomeration of the battery shreds is prevented, so that the battery shreds may be easily moved.

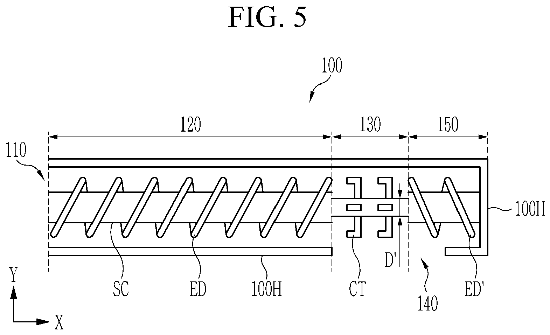

FIG. 5 is a cross-sectional view of a screw conveyor according to another embodiment of the present invention.

In an embodiment shown in FIG. 5, the diameter of the screw SC disposed above the outlet 140 may be smaller than the diameter of the screw SC disposed in the inlet 110 and the transport section 120. Specifically, the diameter of the screw SC disposed above the outlet 140 may be smaller than the diameter of the screw SC of the transport section 120 and/or the reverse transport section 150. The diameter of the screw SC disposed above the outlet 140 (specifically, within the pressure release section 130) may be smaller than that in other regions enables, so that the area for battery shreds remaining within the pressure release section 130 may be expanded, and a cutting member CT disposed on the surface of the screw SC within the pressure release section 130 may more easily cut the battery shreds.

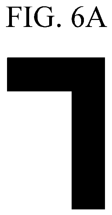

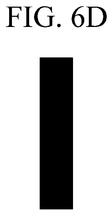

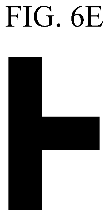

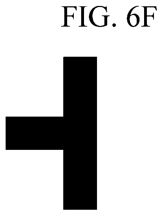

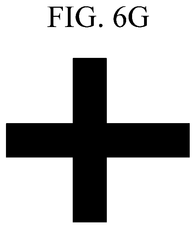

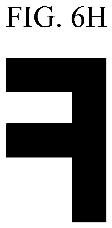

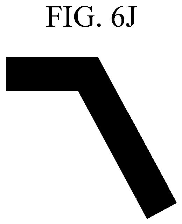

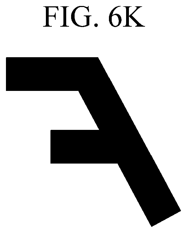

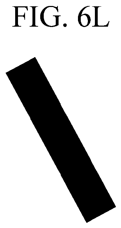

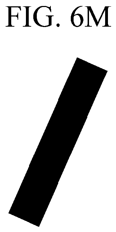

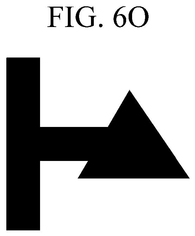

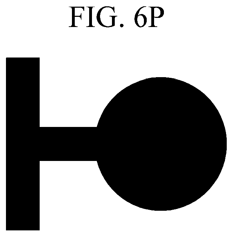

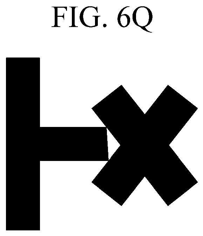

FIGS. 6a-6q illustrate various shapes of a cutting member according to the present invention.

Referring to FIGS. 6a to 6q, the cutting member CT is disposed on a surface of the screw SC disposed in the pressure relief section 130 and may comprise at least one branch portion in cross section. Specifically, since the cutting member CT has an inclined structure, it rotates together with the screw SC and may easily cut battery shreds.

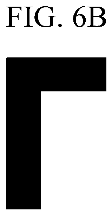

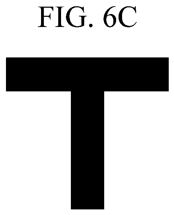

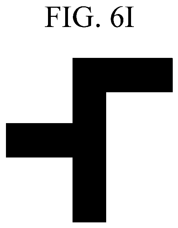

Referring to FIGS. 6a and 6b, a cross-sectional shape of the cutting member may have a shape of a " 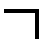 " character or a shape obtained by rotating " 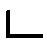 " character. Referring to FIGS. 6c to 6h, a cross-sectional shape of the cutting member may have a shape of a " 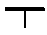 " character, "l" shape, "├" character, "┤" character, "+" shape, or " 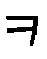 " character. Referring to FIGS. 6i to 6m, the cutting member may have an inclined shape with a predetermined angle. In addition, in order to facilitate cutting of battery shreds, a branch portion may be further included.

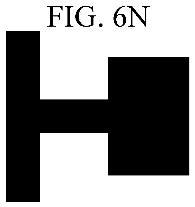

Referring to FIGS. 6n to 6q, the cutting member may further include at least one branch portion disposed in at least some area of the main blade portion. In this way, by including various cross-sectional shapes, the cutting member may cut the battery shreds to have an appropriate size and shape.

Hereinafter, preferred embodiments and comparative examples of the present invention will be described. However, the following embodiments are merely preferred embodiments of the present invention, and the present invention is not limited to the following embodiments.

### Experimental Examples - Clearance between Screw and Wall

The screw feeder according to one embodiment is a means for transferring battery shreds, and is configured to discharge material at an angle of 10° or more from horizontal with respect to an input direction after the material is input during screw transport. Specifically, the transport of battery shreds comprises preparing battery shreds, moving the battery shreds within a screw, passing through a pressure relief section configured to release pressure of the battery shreds before discharging the battery shreds, cutting them after the pressure relief section, and discharging the battery shreds downwards by a reverse rotation section after an outlet. At this time, a discharge direction of the battery shreds is about 90° below a transport direction.

When the clearance between the blade of the screw and an inner wall of a housing surrounding the screw is 5 mm or more, the pressure load during the transport of the shredded material due to overlapping may be reduced, and the problem of the battery shreds being jammed between the blade of the screw and the inner wall of the housing may be prevented.

Table 1 below shows the transport status of battery shreds, the motor torque ratio, and the number of trip occurrences, all according to the clearance between the blade of the screw and the inner wall of the housing.

The following Table 1 shows the experimental results obtained when battery shreds were transported for more than 1 hour using a 3-horsepower motor. The table details the transport status of battery shreds, motor torque, and the number of trip occurrences. The motor torque was expressed as a fraction relative to a maximum output. The transport status was indicated as "possible", "impossible", or "impossible" depending on whether the battery shreds smoothly moved to an outlet. The number of trip occurrences was represented by the number of motor stops.

**[Table 1]**

| Housing Height / Clearance Between Screw and Housing Inner Wall | Clearance Between Screw and Housing Inner Wall | Transfer status | Motor torque ratio | Number of trip occurrences | Remarks |
|---|---|---|---|---|---|
| 0.0025 | within 1 mm | impossible | at least 85 % | 3 times | Comparative Example |
| 0.0075 | 3 mm | possible | 70 % | 1 time | Comparative Example |
| 0.0125 | 5 mm | possible | 65 % | not occurred | Example |
| 0.02 | 8 mm | possible | 60 % | not occurred | Example |
| 0.025 | 10 mm | possible | 58 % | not occurred | Example |
| 0.03 | 12 mm | possible | 58 % | not occurred | Example |
| 0.0375 | 15 mm | possible | 46 % | not occurred | Example |
| 0.05 | 20 mm | possible | 40 % | not occurred | Example |
| 0.0625 | 25 mm | possible | 39 % | not occurred | Example |
| 0.25 | 100 mm | stagnation | - | not occurred | Comparative Example |

Referring to Table 1, it was confirmed that the motor stopped multiple times when the clearance was within 1 mm, and the motor stopped once at 3 mm. Although transportation proceeded normally from 5 mm, a significantly high motor torque was observed. Accordingly, it was confirmed that the clearance between the screw and the inner wall of the housing must be 5 mm or more. Furthermore, it was confirmed that a clearance of 5 to 12 mm must be satisfied to maintain the motor torque at 50% or more while simultaneously facilitating the transportation of battery shreds. It can be confirmed that a stagnation region occurs between the screw and the inner wall of the housing, which makes transportation difficult.

Although the preferred embodiments have been described in detail above, the scope of the present invention is not limited thereto, and various modifications and improvements made by those skilled in the art using the fundamental concepts defined in the following claims shall also fall within the scope of the present invention.

## Claims

1. A screw feeder for transferring battery shreds, the screw feeder comprising:
a housing surrounding a screw disposed parallel to a transport direction of the battery shreds;
an inlet into which the battery shreds are input;
a transport section for transferring the battery shreds input to the inlet; and
an outlet configured to discharge the battery shreds,
wherein the screw feeder satisfies the following Equation 1. <Equation 1> $0.01 \leq A / B < 0.25$
(In Equation 1, A means a clearance between the top end of the screw and the inner wall of the housing, and B means the height of the inner wall of the housing)

2. The screw feeder of claim 1, further comprising a pressure relief section disposed at the front end of the outlet and configured to release pressure of the transferred battery shreds.

3. The screw feeder of claim 2, wherein the pressure relief section comprises a cutting member for cutting the battery shreds into a predetermined size.

4. The screw feeder of claim 1, wherein the screw is disposed to extend from the inlet toward the transport direction of the battery shreds.

5. The screw feeder of claim 4, wherein the screw is not disposed beyond an end of the transport section.

6. The screw feeder of claim 1, wherein the screw is disposed to extend from the inlet toward the upper direction of the outlet and is disposed to be in contact with the sidewall of the housing.

7. The screw feeder of claim 1, wherein a diameter of the screw decreases from the inlet toward the outlet.

8. The screw feeder of claim 1, wherein the diameter of the screw disposed above the outlet is smaller than the diameter of the screw disposed in the inlet and the diameter of the screw disposed in the transport section.

9. The screw feeder of claim 1, wherein the screw comprises an edge member disposed in a helical shape on a surface of the screw, and the edge member is disposed to be inclined at a predetermined angle with respect to a direction parallel to the screw toward a direction perpendicular to an input direction of the battery shreds.

10. The screw feeder of claim 9, comprising a dummy edge member extending from the edge member and disposed in the pressure relief section.

11. The screw feeder of claim 1, comprising a reverse transport section disposed between the transport section and a side portion of the housing.

12. The screw feeder of claim 11, wherein the reverse transport section comprises an edge member disposed to be inclined at a predetermined angle in a direction opposite to the input direction of the battery shreds, relative to the direction parallel to the screw.

13. The screw feeder of claim 1, wherein central axes of the inlet and the transport section have the same axis in a horizontal direction.

14. The screw feeder of claim 1, wherein the outlet is an area in which at least some area of the lower surface of the housing is open.

15. The screw feeder of claim 1, wherein an angle between a direction in which the battery shreds move through the transport section and a direction in which the battery shreds are discharged through the outlet is 10° or more.

16. The screw feeder of claim 1, wherein the clearance between the top end of the screw and the inner wall of the housing is 5 mm or more.
